# EUROPEAN PATENT APPLICATION

(11) **EP 0 962 667 A1**
(43) Date of publication of application: **08.12.1999**
(21) Application number: 98961509.1
(22) Date of filing: 24.12.1998
(51) Int. Cl.: F16C 13/00, G03G 15/08, G03G 15/16, B29D 31/00

(54) **SPONGE ROLL AND METHOD OF MANUFACTURING THE SAME**

(30) Priority: 24.12.1997 JP 36723897
(71) Applicant: TOKAI RUBBER INDUSTRIES, LTD., Komaki-shi, Aichi-ken,485-8550 (JP)
(72) Inventor: KONDO, Mitsuyoshi, Inuyama-shi, Aichi 484-0888 (JP); SHIRAKI, Keita, Inuyama-shi, Aichi 484-0075 (JP)
(74) Representative: Frankland, Nigel Howard
(86) International application number: JP9805847
(87) International publication number: WO9934123

(57) **Abstract**

A sponge roll, such as a toner supply roll, a transfer roll, a cleaning roll, a developing roll and a charged roll which are used for a copier and a printer which utilize an electrophotographic system. The sponge roll has a shaft member, and an elastic sponge layer, at least a part of an outer circumferential surface of the shaft member being formed as a rough surface having a ten-point average roughness (Rz) of 5-300 µm, the elastic sponge layer being integrally molded with the shaft member on the outer circumference of the shaft member without interposing a layer of a bonding agent therebetween. Merely forming a specific rough surface on the shaft member and molding the shaft member and elastic sponge layer together enable a large adhesive strength to be obtained therebetween, so that the sponge roll can sufficiently deliver a higher operating speed and a higher durability required by an electrophotographic copier, the sponge roll requiring no layer of a bonding agent between the shaft member and elastic sponge layer, unlike a conventional sponge roll, whereby it becomes possible to prevent oozed-out bonding agent which causes contamination, and render troublesome steps, such as a bonding agent application step and a bonding agent drying step unnecessary, i.e., simplify the sponge roll manufacturing steps.

## Description

### FIELD OF THE INVENTION

The present invention relates to a sponge roll to be used as a toner supply roll, a transfer roll, a cleaning roll, a developing roll and a charging roll or the like in a copying machine or a printer which utilizes an electrophotographic system.

### PRIOR ART

Copying by a copying machine or a printer using an electrophotographic system (hereinafter, abbreviated to an electrophotographic copying machine or the like) is generally conducted in the following manner. First, an electrostatic latent image of an original image is made on a surface of a photosensitive drum and toner is attached to the electrostatic latent image for forming a toner image. The toner image was transferred to a sheet of paper, for obtaining a copy. In this case, the original image is projected through an optical system on a preliminarily charged surface of the photosensitive drum and electrification is canceled on a portion where light is applied, for obtaining an electrostatic latent image. Next, toner is supplied from a toner cartridge via a toner supply roll to a developing roll whereby the toner is attached to the electrostatic latent image, for obtaining a toner image. Further, the toner image is transferred via a transferring device such as a transfer roll on a sheet of paper. Even further, the sheet of paper having the toner image is passed through a fuser roll so that the toner image is fixed, and thus copying is conducted. Then, toner remaining on the photosensitive drum is eliminated by a cleaning device such as a cleaning roll or the like.

As a sponge roll to be used as a toner supply roll, a transfer roll, a cleaning roll, a developing roll, a charging roll or the like in an electrophotographic copying machine or the like, for example, widely used is a sponge roll of an elastic sponge layer of polyurethane foam formed on a peripheral surface of a shaft. When conductivity is required, the sponge roll containing a conductive agent in the elastic sponge layer is used.

As a method of producing the above-mentioned sponge roll, heretofore, a conventional method comprises placing a shaft in a mold wherein a mold-release agent has been preliminarily applied, filling a material having a designated formulation for forming polyurethane foam, conducting a foaming reaction of the material for forming polyurethane foam so as to be cured, and forming an elastic sponge layer on a peripheral surface of the shaft. In this method, the elastic sponge layer is adhered to the shaft by using the adhesive strength of the elastic sponge layer of the polyurethane foam without an adhesive.

In the electrophotographic copying machine or the like using the above-mentioned sponge roll, higher-speed operation and higher durability are further required from now on, so that a higher adhesive strength between the shaft and the elastic sponge roll is further required. However, since the sponge roll obtained by the above-mentioned conventional method has insufficient adhesive strength, it is impossible to satisfy the demands for the higher operating speed and the higher durability. To obtain sufficient adhesive strength, it is thought that an adhesive layer should be formed between the shaft and the elastic sponge layer. However, such a method has drawbacks in production such as contamination by an oozed-out adhesive and increased production steps because of the necessity of an adhesive application step and an adhesive drying step. In addition, it requires the troublesome steps of peeling off the adhesive from both surfaces of the shaft and the elastic sponge layer for recycling, resulting in inferiority from a viewpoint of recycling.

In view of the foregoing, it is an object of the present invention to provide a sponge roll whereby a strong adhesive strength can be obtained between a shaft and an elastic sponge layer without an adhesive layer interposed therebetween and production becomes easy, and a method of producing the same.

### DISCLOSURE OF THE INVENTION In accordance with a first aspect of the

present invention, there is provided a sponge roll comprising a shaft and an elastic sponge layer, wherein at least a part of an outer peripheral surface of the shaft is formed as a rough surface having a ten-point average roughness (Rz) of 5 to 300 µm and the elastic sponge layer is integrally molded on the outer peripheral surface of the shaft without an adhesive layer interposed therebetween.

Further, in accordance with a second aspect of the present invention, there is provided a method of producing a sponge roll comprising the steps of forming at least a part of an outer peripheral surface of a shaft as a rough surface having a ten-point average roughness (Rz) of 5 to 300 µm, installing the shaft into a mold, filling a material for forming an elastic sponge layer in a cavity of the mold and molding integrally the elastic sponge layer on the outer peripheral surface of the shaft due to the material so as to obviate interposition of an adhesive layer therebetween.

The inventors of the present invention have made intensive studies to obtain a sponge roll wherein adhesive strength between a shaft and an elastic sponge layer is superior without using an adhesive. During the process of the studies, the inventors considered that high adhesive strength can be obtained without an adhesive layer if at least of a part of a peripheral surface of the shaft is formed as a rough surface and integrally molded with the elastic sponge layer. As a result of studies an the rough surface of the peripheral surface of the shaft, the inventors found that high adhesive strength between the shaft and the elastic sponge layer can be obtained when the surface roughness is formed with a ten-point average roughness (Rz) of 5 to 300 µm, even it an adhesive layer is not interposed therebetween. Thus, the inventors have attained the present invention.

Also, the inventors found that the above-mentioned sponge roll can be easily produced by a method comprising the steps of forming at least a part of an outer peripheral surface of a shaft as a rough surface having a ten-point average roughness (Rz) of 5 to 300 µm, installing the shaft into a mold, filling a material for forming an elastic sponge layer in space of the mold and molding integrally the elastic sponge layer on an outer peripheral surface of the shaft due to the material so as to obviate interposition of an adhesive layer therebetween. Thus, the inventors have attained the present invention.

Further, when the density of the elastic sponge layer is not less than 0.05g/cm², superior durability is provided.

Even further, when polyurethane foam is used for forming the elastic sponge layer, an elastic sponge layer of polyurethane foam can be integrally molded onto the peripheral surface of the shaft so that production steps can be simplified.

### BRIEF DESCRIPTION OF THE DRAWINGS

Fig. 1 is a vertical sectional view illustrating one embodiment of a sponge roll of the present invention;
Fig. 2 is a horizontal sectional view illustrating the sponge roll of Fig. 1;
Fig. 3 is a sectional view illustrating one embodiment of a method of producing a sponge roll according to the present invention;
Fig. 4 is an elevation schematically illustrating a jig for measuring adhesive strength;
Fig. 5 is a side view illustrating the jig of Fig. 4; and
Figs. 6 and 7 are explanatory views illustrating a method of measuring hardness of a elastic sponge layer.

### BEST MODE OF CARRYING OUT THE INVENTION

The present invention will hereinafter be described in detail by way of embodiments thereof.

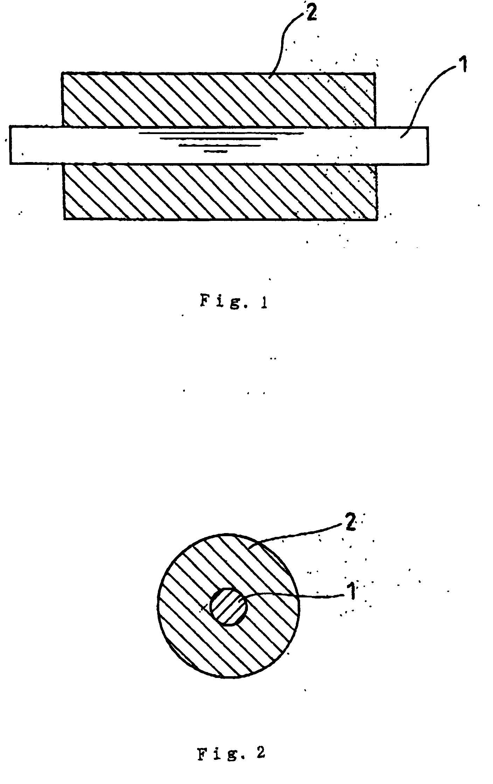

The sponge roll of the present invention may have, for example, a structure having a shaft 1 and an elastic sponge layer 2, as shown in Figs. 1 and 2. A main feature of the present invention is that at least a part of a peripheral surface of the shaft 1 is formed as a rough surface with a ten-point average roughness (Rz) of 5 to 300 µm and the elastic sponge layer 2 is integrally molded on the peripheral surface of the shaft 1 without an adhesive layer interposed therebetween. In addition, the ten-point average roughness (Rz) is in accordance with JIS B 0601.

Generally, the shaft 1 may be formed of metals such as iron, aluminum or copper. A shape of the shaft 1 may be, for example, a solid core, a hollow cylinder or the like.

In the shaft 1, at least a part of the peripheral surface should be formed as a rough surface with a ten-point average roughness (Rz) of 5 to 300 µm, more preferably 10 to 200 µm, most preferably 10 to 100 µm. That is, when the ten-point average surface roughness is less than 5 µm, surface roughness is insufficient so that an anchoring effect of the material for forming the elastic sponge layer to the surface of the shaft 1 cannot be expected, resulting in insufficient adhesive strength. On the other hand, when the ten-point average surface roughness (Rz) exceeds 300 µm, the processing cost becomes high and an improvement in adhesive strength is not as expected. In addition, a rough surface is not necessarily formed on a whole peripheral surface of the shaft 1. At least a part of the peripheral surface of the shaft 1 may be formed as a rough surface, especially, at positions adjacent to both ends of the elastic sponge layer 2.

Exemplary methods of forming the peripheral surface of the shaft 1 as a rough surface may include a shot blasting method, a knurling method and an etching method, which may be combined. Alternatively, these methods may be combined with other methods. Among all, a shot blasting method is preferred from a viewpoint of processing cost and uniformity of the process.

Exemplary materials of the elastic sponge layer 2 for being integrally molded on the peripheral surface of the shaft 1 may include, for example, polyurethane foam forming materials, urethane elastomer forming materials and silicone sponge forming materials, among which the polyurethane foam forming materials are preferred from a viewpoint of good adhesiveness with the shaft 1.

Examples of the polyurethane foam forming materials may include a polyhydroxyl compound, a polyisocyanate compound, a chain-lengthening agent, a catalyst, a foaming agent, various conductivity imparting agents and other additives.

Examples of the polyhydroxyl compound may be a polyol generally used for production of polyurethane foam or urethane elastomer and may include a polyolefin polyol, such as polyether polyol, polyester polyol, polybutadiene polyol or polyisoprene polyol, having a hydroxyl group. These may be used either alone or in combination.

Examples of the polyisocyanate compound may be a polyisocyanate generally used for production of polyurethane foam and urethane elastomer, and may include tolylene diisocyanate (TDI), crude TDI, 4,4-diphenylmethane diisocyanate (MDI), crude MDI and various modified MDI. These may be used either alone or in combination.

The isocyanate is preferably used in an amount equivalent to isocyanate index of about 100 to 130 with respect to the polyol.

Examples of the chain-lengthening agent may include ethylene glycol, 1,4-butanediol and 1,6-hexanediol. These may be used either alone or in combination.

Examples of the catalyst may include amine compounds such as triethylenediamine, N-methyl morpholine, N-ethyl morpholine, N-methyl-diethanolamine, N-ethyl-diethanolamine, organic tin compounds such as dibutyltindilaurate (DBTDL). These may be used either alone or in combination.

Exemplary methods for forming the polyurethane foam may include a one-shot method and a prepolymer method.

The density of the elastic sponge layer 2 is preferably not less than 0.05g/cm³, more preferably 0.05 to 0.7g/cm³. That is, when the density is less than 0.05g/cm³, the strength of the elastic sponge layer 2 is low, resulting in a tendency of inferior durability.

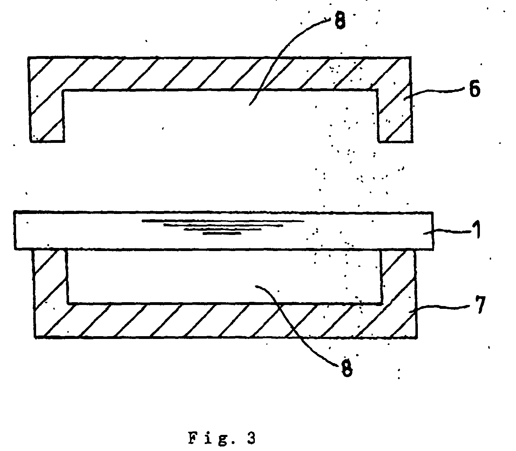

Next, an example of producing the sponge roll according to the present invention will be explained. First, the surface of the shaft 1 is formed as a surface roughness having a ten-point average roughness (Rz) of 5 to 300 µm by the above-mentioned shot blasting method. Then, the shaft 1 is installed into a mold comprising upper and lower mold halves 6, 7 in pair, as shown in Fig. 3. Next, after polyurethane foam forming materials are filled into a space 8 defined by the mold, a foaming reaction is conducted so as to cure the polyurethane foam. Thus, the sponge roll can be prepared wherein the elastic sponge layer 2 made of polyurethane foam is molded integrally on the peripheral surface of the shaft 1 without interposing an adhesive layer (see Figs. 1 and 2). In addition, it is preferred to apply a mold release agent on a internal surface of the mold. It is possible that a skin layer of the elastic sponge layer 2 may be eliminated by a grinding method or the like, as required, so that a porous surface is obtained for use.

Further, in the above method, after forming the surface of the shaft 1 as a rough surface, the shaft 1 is installed in the mold, however, the present invention is not limited theteto. For example, after the shaft 1 is installed in the mold, the surface of the shaft 1 may be formed as a rough surface.

Even further, the sponge roll of the present invention is not limited to modes shown in Figs. 1 and 2. For example, the sponge roll may have a structure having a surface layer on a peripheral surface of the elastic sponge layer 2. Exemplary materials for forming the surface layer may include rubber materials such as urethane rubber, silicone rubber, ethylene-propylene-diene terpolymer (EPDM) and acrylonitrile-butadiene copolymer rubber (NBR), and resins such as nylon and teflon. In addition, the surface layer may be a so-called self-skin layer, which is formed so as not to clearly differentiate from the elastic sponge layer 2.

The thus obtained sponge roll can be used for a toner supply roll, a transfer roll, a cleaning roll, a developing roll or a charging roll used in an electrophotographic copying machine and the like. Among all, it is preferred to use the sponge roll as a toner supply roll from the viewpoints of low hardness and stress easily caused when using.

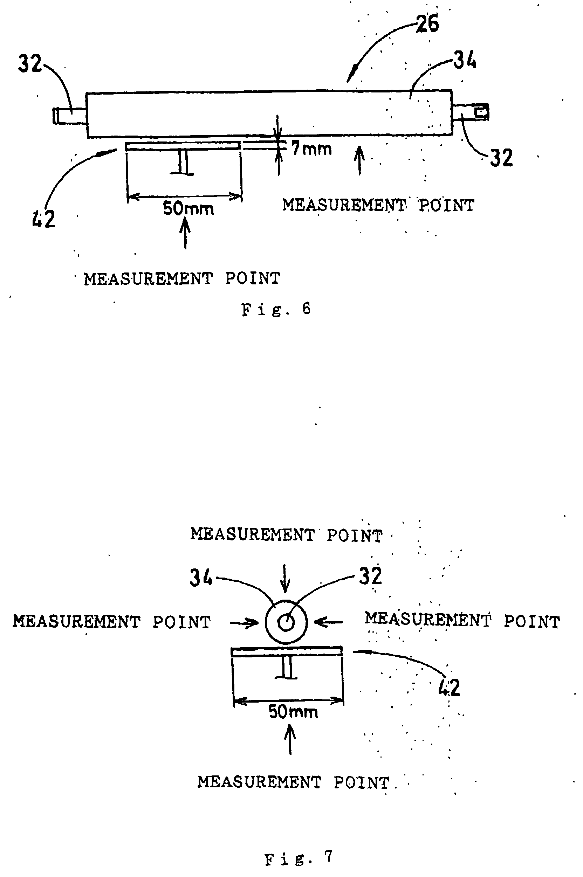

First, such a case is explained that the sponge roll of the present invention is used as a toner supply roll. The toner supply roll is used for supplying toner to a developing roll, whereby the toner is attached onto a static latent image on a surface of a photosensitive drum, as mentioned above, and for which durability, anti-staining properties, flexibility and the like are required. Especially, since there is a recent tendency that toner particle size is decreased for improving clearness of copied image, it is necessary that toner particles are not hardened on the toner supply roll and a filming phenomenon does not occur. When being used for the toner supply roll, the density of the elastic sponge layer 2 is preferably 0.05 to 0.3g/cm³. When the density is less than 0.05g/cm³, there is a tendency that the elastic sponge layer 2 has low strength and inferior durability. On the other hand, when the density exceeds 0.3g/m³, there is a tendency that the elastic sponge layer 2 is hardened and the toner is easy to deteriorate. Further, the hardness of the elastic sponge layer 2 is preferably 50 to 350g/50mm. When the hardness is less than 50g/50mm, there is a tendency that the elastic sponge layer 2 has low strength and inferior durability. On the other hand, when it exceeds 350g/50mm, there is a tendency that the toner is easy to deteriorate. The method of measuring the hardness of the elastic sponge layer 2 is as follows. As shown in Figs. 6 and 7, the hardness is indicated by a load (g) when applying a displacement of 1mm by pressing the elastic sponge layer 34 with a jig 42 having a 50mm wide surface (7mm thick) after supporting opposite ends 32 of the shaft of the sponge roll 26. As the above load value becomes larger, the hardness of the elastic sponge layer 34 increases or the elastic sponge layer 34 is harder. Still further, the measuring points are eight points of four points at each 90° in a circumferential direction for each two points in an axial direction, as shown, and each value is an average thereof.

Next, such a case is explained that the sponge roll of the present invention is used as a transfer roll. The transfer roll rotates while pressing against a photosensitive drum via a recording medium such as paper, so that the toner image on the photosensitive drum is transferred. onto a piece of paper or the like. For high resolution of an image, an electrically and magnetically uniform field, a sufficiently large friction coefficient, and high adhesiveness due to low density are required in the transfer roll. It is preferred that a conductive agent is added to the elastic sponge layer 2 for imparting conductivity. It is preferred that the electrical resistance of the elastic sponge layer 2 has a specific volume resitivity of 1 × 10⁵ to 1 × 10¹⁰ Ω · cm and the elastic sponge layer 2 has an Asker C hardness of 10 to 70°. Further, the surface of the elastic sponge layer 2 may be rough and the surface thereof preferably has a ten-point average roughness (Rz) of 1 to 50 µm. If the surface of the elastic sponge layer 2 is rough, it is advantageous since toner filming is difficult to occur.

Examples of the conductive agent added to the elastic sponge layer 2 may include an electronic conductive agent and an ionic conductive agent. These may be used either alone or in combination. Examples of the electronic conductive agent may include carbon blacks and metallic oxides such as a solid solution of zinc oxide and aluminum oxide, a solid solution of zinc oxide and antimony oxide and a solid solution of indium oxide and tin oxide. These may be used either alone or in combination. Examples of the ionic conductive agent may include quaternary ammonium salts such as trimethyloctadecylammonium chloride, benzyltrimethylammonium chloride, trioctylpropylammonium chloride and trimethyloctadecylammonium perchloride, perchloric acid salts, benzoic acid salts, nitrites and sulfates. These may be used either alone or in combination.

Further, such a case is explained that the sponge roll of the present invention is used as a cleaning roll. The cleaning roll is used for eliminating remaining toner on a photosensitive drum and requires durability, flexibility and the like and also requires a property not to contaminate the photosensitive drum by unreacted monomers, oligomers or the like of materials used for forming polyurethane foam. It is preferred to form the surface of the elastic sponge layer 2, (or the surface layer when forming such a surface layer on a peripheral surface of the elastic sponge layer 2) denser than the inside thereof for obtaining the above properties. The elastic sponge layer 2 preferably has an Asker C hardness of 10 to 70°.

The present invention will hereinafter be explained by way of Examples and Comparative Examples of a toner supply roll.

### EXAMPLE 1

First, a round rod, SUM22, (free-machining steel obtained by adding sulfur to carbon steel) having a diameter of 5mm was prepared as a shaft. A peripheral surface of the shaft was treated by a shot blasting method to form a rough surface having a ten-point average roughness (Rz) of 5 µm. On the other hand, a mixture of materials for forming polyurethane foam, as shown in the following Table 1, was prepared. After installing the shaft in a mold, the mixture was filled into a cavity of the mold. Subsequently, the mixture was cured through a foaming reaction so that an elastic sponge layer made of polyurethane foam was integrally molded on a peripheral surface of the shaft. Then, a skin layer of a surface of the elastic sponge layer was eliminated by grinding so that a toner supply roll was produced. In addition, the elastic sponge layer had a density of 0.1g/cm³, a hardness of 270g/50mm, a thickness of 5.5mm and the toner supply roll had an outer diameter of 16mm.

**TABLE 1**

| | | |
|---|---|---|
| (parts by weight) | | |

| Materials for forming polyurethane foam | | |
|---|---|---|
| polyether polyol | EP-828 available from Mitsui Chemicals, Inc., OH value=28 | 90 |
| | POP-31-28 available from Mitsui Chemicals, Inc., OH value=28 | 10 |
| silicone foam stabilizer (L-5309 available from Nippon Unicar LTD.) | | 3 |
| water (foaming agent) | | 2 |
| tertiary amine catalyst | KAOLIZER No. 31 available from Kao Corporation | 0.5 |
| | TOYOCAT HX-35 available from Tosoh Corp. | 0.1 |
| tin catalyst (DBTDL) | | 0.1 |
| isocyanate (Sumidur VT-80 available from Sumitomo Bayer Urethane Co., Inc., NCO=45%) | | 26.9 |

### EXAMPLE 2

A toner supply roll was produced in the same manner as EXAMPLE 1 except that a peripheral surface of the shaft was treated to form a rough surface having a ten-point average roughness (Rz) of 10 µm.

### EXAMPLE 3

A toner supply roll was produced in the same manner as EXAMPLE 1 except that a peripheral surface of the shaft was treated to form a rough surface having a ten-point average roughness (Rz) of 20 µm.

### EXAMPLE 4

A toner supply roll was produced in the same manner as EXAMPLE 1 except that a peripheral surface of the shaft was treated to form a rough surface having a ten-point average roughness (Rz) of 50 µm.

### EXAMPLE 5

A toner supply roll was produced in the same manner as EXAMPLE 1 except that a peripheral surface of the shaft was treated to form a rough surface having a ten-point average roughness (Rz) of 100 µm.

### EXAMPLE 6

A toner supply roll was produced in the same manner as EXAMPLE 1 except that a peripheral surface of the shaft was treated to form a rough surface having a ten-point average roughness (Rz) of 300 µm.

### COMPARATIVE EXAMPLE 1

A toner supply roll was produced in the same manner as EXAMPLE 1 except that a peripheral surface of the shaft was treated to form a rough surface having a ten-point average roughness (Rz) of 2 µm.

### COMPARATIVE EXAMPLE 2

A toner supply roll was produced in the same manner as EXAMPLE 1 except that a peripheral surface of the shaft was treated to form a rough surface having a ten-point average roughness (Rz) of 3 µm.

### COMPARATIVE EXAMPLE 3

A toner supply roll was produced in the same manner as EXAMPLE 1 except that a peripheral surface of the shaft was treated to form a rough surface having a ten-point average roughness (Rz) of 400 µm.

The adhesive strength, durability and processing cost of the thus obtained toner supply rolls in the EXAMPLES and COMPARATIVE EXAMPLES were evaluated in accordance with the following standards. These results are shown in the following Table 2. In addition, each ten-point average roughness (Rz) of the surface of each toner supply roll is also shown in the same Table.

### Adhesive strength

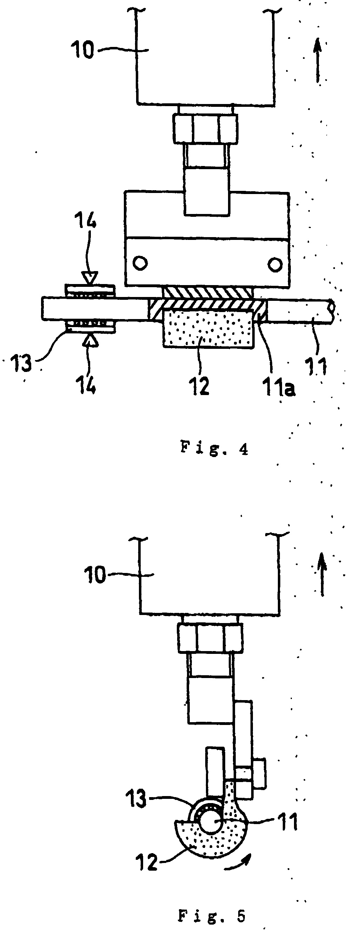

Each adhesive strength between the shaft 11 and the elastic sponge layer 12 was measured using a jig for measuring the adhesive strength and a tensile tester (MODEL-1605 available from AIKOH ENGINEERING CO., LTD.), as shown in Figs. 4 and 5. That is, the elastic sponge layer 12 was cut out into 20mm width and half of the elastic sponge layer 12 was peeled off in a peripheral direction. Then, an end of the shaft 11 was fixed by a clamp 14. Next, a 5kg-load cell 10 was connected with the tensile tester (not shown) and was pulled up at a speed of 5mm/min in a direction of an arrow, and a tensile load was measured so that its yield point was defined as the adhesive strength. In addition, in figures, 11a is a rough surface of the shaft 11 and 13 is a ball cage.

### Durability

The toner supply roll was incorporated into a cartridge of a printer (Color laser shot LBP-2030 available from Canon Inc.) and evaluation of durability (peeling on an end, image) was conducted after outputting 2,000 copies under a low-temperature low-moisture conditions of 15°C × 10%RH. In addition, evaluation results were indicated as follows.

### Peeling on an end

○ : No abnormality.
△: Peeling of 1 to 3mm occurred on an end of the elastic sponge layer, which, however, is acceptable.
X: Peeling of greater than 3mm occurred on an end of the elastic sponge layer or a fracture on a part of the elastic sponge layer.

### Image

○ : No abnormality.
△: Dense difference occurred slightly on an end, which, however, is acceptable.
X: Obvious density difference occurred on an end.

### Processing cost

The processing cost for forming a peripheral surface of the shaft as a desired surface roughness by a shot-blasting method was evaluated in accordance with the following standards.
○ : Since a ten-point average roughness (Rz) is small, the processing cost is low.
△: The processing cost becomes slightly high, but is acceptable.
X: Since a ten-point average roughness (Rz) is large, the processing cost is expensive.

**TABLE 2**

| | ten-point average roughness (µm) | adhesive strength (g/20mm) | durability | | processing cost | general evaluation |
|---|---|---|---|---|---|---|
| | | | peeling on an end | outputted image | | |
| | | | | | | |

| EXAMPLES | | | | | | |
|---|---|---|---|---|---|---|
| 1 | 5 | 80 | △ | ○ | ○ | ○ |
| 2 | 10 | 100 | ○ | ○ | ○ | ⓞ |
| 3 | 20 | 110 | ○ | ○ | ○ | ⓞ |
| 4 | 50 | 120 | ○ | ○ | **○** | ⓞ |
| 5 | 100 | 125 | ○ | ○ | ○ | ⓞ |
| 6 | 300 | 125 | ○ | ○ | △ | ○ |

| COMPARATIVE EXAMPLES | | | | | | |
|---|---|---|---|---|---|---|
| 1 | 2 | 44 | X | X | ○ | X |
| 2 | 3 | 50 | X | △ | ○ | X |
| 3 | 400 | 130 | ○ | ○ | X | X |

From the results of the Table 2, all of toner supply rolls of the EXAMPLES had high adhesive strength of not less than 80g/20mm, and thus had superior adhesiveness. Therefore, the toner supply rolls of EXAMPLES 2 to 6 had no peeling on each end, and thus had superior durability while the toner supply roll of EXAMPLE 1 had a slight peeling on the end, which, however, was acceptable. Further, all the toner supply rolls of the EXAMPLES had no abnormality on outputted images, and thus had superior durability. Still further, the toner supply rolls of EXAMPLES 1 to 5 were processed at a low cost, while the processing cost of the toner supply roll of EXAMPLE 6 became slightly higher, which, however, was acceptable. In this way, since the ten-point average roughness on the surface of the shaft of all the toner supply rolls of the EXAMPLES was each 5 to 300 µm, general evaluation was good. Among all, the toner supply rolls of EXAMPLBS 2 to 5, having a ten-point surface roughness (Rz) of 10 to 100 µm, gained an excellent general evaluation.

On the other hand, the toner supply rolls of COMPARATIVE EXAMPLES 1 and 2 were each processed at a low cost, however, the shaft surface thereof had a ten-point surface roughness (Rz) of less than 5 µm so that their adhesive strength was low or not more than 50g/20mm, and thus had inferior adhesiveness. Therefore, the toner supply rolls of COMPARATIVE EXAMPLES 1 and 2 each had peeling on an end and also an inconsistency in density, and thus were inferior in durability, resulting in general evaluation of X. Further, the toner supply roll of COMPARATIVE EXAMPLE 3 had a high adhesive strength of 130g/20mm, and thus had superior adhesiveness. For this reason, the toner supply roll of COMPARATIVE EXAMPLE 3 had no peeling on an end, no abnormal outputted images, and thus had superior durability. However, the toner supply roll of COMPARATIVE EXAMPLE 3 had a ten-point average surface roughness (Rz) on the surface of the shaft of greater than 300 µm so that the processing cost for forming the surface of the shaft as a rough surface was high, resulting in a poor general evaluation.

### INDUSTRIAL APPLICABILITY

As described above, in the sponge roll of the present invention has at least a part of an outer peripheral surface of the shaft formed as a rough surface having a ten-point average roughness (Rz) of 5 to 300 µm and the elastic sponge layer is integrally molded on the outer peripheral surface of the shaft without interposing an adhesive layer therebetween. The sponge roll can be produced by a method comprising steps of forming at least a part of an outer peripheral surface of a shaft as a rough surface having a ten-point average roughness (Rz) of 5 to 300 µm, installing the shaft into a mold, filling a material for forming an elastic sponge layer in a cavity of the mold and molding integrally the elastic sponge layer on an outer peripheral surface of the shaft due to the material without interposing an adhesive layer therebetween. Thus, large adhesive strength can be obtained between the shaft and the elastic sponge layer merely by forming of a specific rough surface on the shaft and integrally molding, so that the sponge roll can sufficiently offer a higher operating speed and a higher durability required by an electrophotographic copying machine. The sponge roll requires no adhesive layer between the shaft and the elastic sponge layer, unlike a conventional sponge roll, whereby it becomes possible to prevent contamination or the like by an oozed-out adhesive and obviate troublesome steps such as an adhesive application step and an adhesive drying step so as to simplify the sponge roll producing steps. In addition, since an adhesive is not used according to the present invention, it obviates troublesome steps of peeling off an adhesive from both the surface of the shaft and the elastic sponge layer when recycling, providing excellent recyclability.

## Claims

1. A sponge roll comprising a shaft and an elastic sponge layer, wherein at least a part of an outer peripheral surface of the shaft is formed as a rough surface having a ten-point average roughness (Rz) of 5 to 300 µm and the elastic sponge layer is integrally molded on the outer peripheral surface of the shaft without interposing an adhesive layer therebetween.

2. The sponge roll according to claim 1, wherein the elastic sponge layer is formed of polyurethane foam.

3. The sponge roll according to claim 1 or 2, wherein the outer peripheral surface of the shaft is formed as a rough surface by a shot blasting method.

4. The sponge roll according to any of claims 1 to 3, wherein a surface layer is formed on an outer peripheral surface of the elastic sponge layer.

5. The sponge roll according to any of claims 1 to 4, wherein the elastic sponge layer has a density of not less than 0.05g/cm³.

6. The sponge roll according to any of claims 1 to 5, wherein the ten-point average roughness (Rz) is 10 to 100 µm.

7. The sponge roll according to any of claims 1 to 6, wherein the sponge roll is a toner supply roll.

8. The sponge roll according to claim 7, wherein the elastic sponge layer has a density of 0.05 to 0.3g/cm³ and a hardness of 50 to 350g/50mm.

9. A method of producing a sponge roll comprising steps of:
forming at least a part of an outer peripheral surface of a shaft as a rough surface having a ten-point average roughness (Rz) of 5 to 300 µm;
installing the shaft into a mold;
filling a material for forming an elastic sponge layer in a cavity of the mold; and
molding integrally the elastic sponge layer on an outer peripheral surface of the shaft due to the material without interposing an adhesive layer therebetween.

10. The method according to claim 9, wherein polyurethane foam is used as a material for forming the elastic sponge layer.

11. The method according to claim 9 or 10, wherein the outer peripheral surface of the shaft was formed as a rough surface by a shot blasting method.

12. The method according to any of claims 9 to 11, wherein a surface layer is formed on an outer peripheral surface of the elastic sponge layer.

13. The method according to any of claims 9 to 12, wherein the elastic sponge layer has a density of not less than 0.05g/cm³.

14. The method according to any of Claims 9 to 13, wherein the ten-point average roughness (Rz) is 10 to 100 µm.

15. The method according to any claims 9 to 14, wherein the sponge roll is a toner supply roll.

16. The method according to claim 15, wherein the elastic sponge layer has a density of 0.05 to 0.3g/cm³ and a hardness of 50 to 350g/50mm.
